# EUROPÄISCHE PATENTSCHRIFT

(11) **EP 4 356 739 B1**
(45) Veröffentlichungstag und Bekanntmachung des Hinweises auf die Patenterteilung: **22.01.2025**
(21) Anmeldenummer: 23204407.3
(22) Anmeldetag: 18.10.2023
(51) Int. Cl.: A21C 13/02, A21C 1/14

(54) **TEIGBEARBEITUNGSANLAGE MIT MEHREREN TEIGBEARBEITUNGSEINRICHTUNGEN SOWIE VERFAHREN ZUM BETRIEB EINER DERARTIGEN TEIGBEARBEITUNGSANLAGE**
DOUGH PROCESSING SYSTEM HAVING A PLURALITY OF DOUGH PROCESSING DEVICES AND METHOD FOR OPERATING SUCH A DOUGH PROCESSING SYSTEM
INSTALLATION DE TRAITEMENT DE PÂTE DOTÉE DE PLUSIEURS DISPOSITIFS DE TRAITEMENT DE PÂTE AINSI QUE PROCÉDÉ DE FONCTIONNEMENT D'UNE TELLE INSTALLATION DE TRAITEMENT DE PÂTE

(30) Priorität: 20.10.2022 DE 102022211142
(43) Veröffentlichungstag der Anmeldung: 24.04.2024
(73) Patentinhaber: WP Kemper GmbH, 33397 Rietberg (DE)
(72) Erfinder: Oestersötebier, Felix, 33332 Gütersloh (DE)
(74) Vertreter: Rau, Schneck & Hübner Patentanwälte Rechtsanwälte PartGmbB

(56) Entgegenhaltungen:
- EP-A2- 1 296 137
- DE-A1- 102008 056 881
- DE-A1- 102009 023 486
- US-A1- 2011 138 977

## Beschreibung

Die vorliegende Patentanmeldung nimmt die Priorität der deutschen Patentanmeldung DE 10 2022 211 142.7 in Anspruch.

Die Erfindung betrifft eine Teigbearbeitungsanlage mit mehreren Teigbearbeitungseinrichtungen. Ferner betrifft die Erfindung ein Verfahren zum Betreiben einer derartigen Teigbearbeitungsanlage.

Eine Teigbearbeitungsanlage ist bekannt aus der WO 2022/103 611 A1 und der EP 1 173 720 B1. Komponenten für eine derartige Teigbearbeitungsanlage sind bekannt aus der WO 2015/043 107 A1 und aus der EP 3 613 290 A1. Die DE 10 2008 056 881 A1 offenbart ein Verfahren zur Herstellung von Backgut sowie eine Anlage zur automatischen Herstellung von Backgut.

Die EP 1 296 137 A2 offenbart eine Teig-Messung zur Überwachung und Regelung der Teigqualität bei der automatischen Teigbearbeitung. Die US 2011/0 138 977 A1 offenbart eine Teig-Portioniereinrichtung. Die DE 10 2009 023 486 A1 offenbart eine Teigbearbeitungsanlage.

Es ist eine Aufgabe der vorliegenden Erfindung, eine Teigbearbeitungsanlage und ein Betriebsverfahren hierfür derart weiterzubilden, dass eine Verbesserung einer Betriebseffizienz der Teigbearbeitungsanlage sowie des Betriebsverfahrens ermöglicht ist.

Diese Aufgabe ist erfindungsgemäß gelöst durch eine Teigbearbeitungsanlage mit den in Anspruch 1 angegebenen Merkmalen sowie durch ein Betriebsverfahren mit den im Anspruch 8 angegebenen Merkmalen.

Erfindungsgemäß wurde erkannt, dass es mittels einer dann als Signalgenerierungs-Teigbearbeitungseinrichtung ausgeführten Teigbearbeitungseinrichtung möglich ist, Teig-Zustandsgrößen zu erfassen, die dann mit Hilfe der Steuer/Regeleinrichtung der Teigbearbeitungsanlage zum Steuern beziehungsweise Regeln eines Arbeitszustandes der mindestens einen Signalempfangs-Teigbearbeitungseinrichtung zu nutzen. Als Signalgenerierungs-Teigbearbeitungseinrichtung hat sich dabei die Teig-Dosiereinrichtung, die Teig-Kneteinrichtung, die Teigportions-Veredelungseinrichtung und/oder die Teigportions-Gäreinrichtung als besonders vorteilhaft herausgestellt. Weitere Teigbearbeitungseinrichtungen, die bei der Teigbearbeitungsanlage insbesondere als Signalgenerierungs-Teigbearbeitungseinrichtung zum Einsatz kommen können, sind eine Teig-Teileinrichtung zum Portionieren vorbereiteten Teigs, eine Teig-Wirkeinrichtung für vorbereitete Teigportionen sowie eine Teig-Aufbereitungseinrichtung zum Aufbereiten von Teig. Über die Teig-Dosiereinrichtung lassen sich Teig-Zustandsgrößen in Zusammenhang mit der Teigdosierung gewinnen, die für bei der Teigbearbeitung nachfolgenden Teigbearbeitungseinrichtungen zur Steuerung beziehungsweise Regelung genutzt werden können. Auch über die Teig-Kneteinrichtung lassen sich Teig-Zustandsgrößen gewinnen, die dann an im Teigbearbeitungsprozess vorgeordnete Teigbearbeitungseinrichtungen zur Steuerung/Regelung weitergegeben werden können. Beispiele für derartige Teig-Zustandsgrößen sind beschrieben in der EP 3 613 290 A1. Auch die Teigportions-Veredelungseinrichtung kann zur Gewinnung entsprechender Teig-Zustandsgrößen genutzt werden, beispielsweise Streuparameter und/oder Stüpfelparameter. Entsprechendes gilt für die Teigportions-Gäreinrichtung, wobei hier beispielsweise eine Gärzeit oder auch eine Gärtemperatur oder eine Gärfeuchtigkeit für vorgeordnete Teigbearbeitungseinrichtungen interessante Steuer/Regelgrößen darstellen können.

Es resultiert eine Teigbearbeitungsanlage, mit der eine einrichtungsübergreifende Steuerungs/Regelungsstrategie möglich ist.

Die Teigbearbeitungsanlage kann mehrere Signalgenerierungs-Teigbearbeitungseinrichtungen und/oder mehrere Signalempfangs-Teigbearbeitungseinrichtungen aufweisen, die im Rahmen des Betriebsverfahrens der Teigbearbeitungsanlage miteinander über die Steuer/Regeleinrichtung im Rahmen einer Steuerung beziehungsweise Regelung zusammenwirken.

Bei der Teigbearbeitungsanlage kann es sich um eine Brötchenanlage oder auch um eine Donutanlage handeln. Bei der Teigbearbeitungsanlage kann es sich auch um eine Fettgebäckanlage handeln. Mit der Teigportions-Veredelungseinrichtung kann eine Glasur, eine Marmeladenbeimpfung oder auch eine Bezuckerung einer Teigportion beziehungsweise eines Teiglings erfolgen.

Bei der Signalgenerierungs-Teigbearbeitungseinrichtung handelt es sich um eine der Signalempfangs-Teigbearbeitungseinrichtung nachgeordnete Teigbearbeitungseinrichtung. Eine Rückwärts-Steuerung/Regelung nach Anspruch 1 stellt eine interessante Möglichkeit dar, um über sensorisch erfasste Teig-Zustandsgrößen steuernde beziehungsweise regelnde Eingriffe in Verarbeitungsschritte vorzunehmen, die vor dem Bearbeitungsschritt der sensorischen Erfassung liegen, um korrigierend in den Bearbeitungsprozess einzugreifen.

Eine Teigbearbeitungsanlage nach Anspruch 3 bietet eine vorteilhafte Aufteilung eines gesamten Teigbearbeitungsverfahrens in voneinander strukturiert trennbare Einzelschritte. Auch mindestens eine dieser weiteren Teigbearbeitungseinrichtungen, also die Teig-Teileinrichtung und/oder die Teig-Wirkeinrichtung und/oder der Backofen als Beispiel für eine Backbeziehungsweise Gareinrichtung der Teigbearbeitungsanlage kann als Signalgenerierungs-Teigbearbeitungseinrichtung und/oder als Signalempfangs-Teigbearbeitungseinrichtung in der Teigbearbeitungsanlage zum Einsatz kommen. Mit Hilfe einer solchen Back- beziehungsweise Gareinrichtung kann beispielsweise ein Fettbacken stattfinden.

Eine Vorwärts-Steuerung/Regelung nach Anspruch 4 ermöglicht eine steuernde/regelnde Reaktion auf erfasste Teig-Zustandsgrößen im der Erfassung nachfolgenden Verarbeitungsprozess, was wiederum zur Verbesserung einer Verfahrenseffizienz beziehungsweise zur Verbesserung einer Qualität des erzeugten Teigprodukts genutzt werden kann.

Bei einer Ausführung nach Anspruch 5 kann als Teig-Kneteinrichtung beispielsweise eine Knetvorrichtung genutzt werden, die bekannt ist aus der EP 3 613 290 A1.

Eine Ausführung der Teig-Teileinrichtung beziehungsweise Teigportioniereinrichtung als Signalgenerierungs-Teigbearbeitungseinrichtung nach Anspruch 6 hat sich bewährt. Insbesondere wurde erkannt, dass beim Portionier- beziehungsweise Teilschritt der Teigbearbeitung, bei der der Teig in die weiterzuverarbeitenden Teigportionen beziehungsweise Teiglinge portioniert wird, definiert Kraft auf den Teig ausgeübt wird, was zum Messen insbesondere der Zustandsgrößen Elastizität und Dämpfung genutzt werden kann.

Teig-Zustandsgrößen nach Anspruch 7 haben sich zur Optimierung eines Betriebsverfahrens für die Teigbearbeitungsanlage als besonderes geeignet herausgestellt. Auch mehrere dieser Teig-Zustandsgrößen können beim Betrieb der Teigbearbeitungsanlage als Eingangsgrößen für die Steuer/Regeleinrichtung genutzt werden. In diesem Fall können auch mehrere Teigbearbeitungseinrichtungen als insbesondere voneinander unabhängige Signalgenerierungs-Teigbearbeitungseinrichtungen zum Einsatz kommen. Eine Erfassung beispielsweise des Teig-Elastizitätsparameters c_{d} oder des Teig-Viskositätsparameters d_{d} ist bekannt aus der EP 3 613 290 A1. Auch Temperaturen einzelner Teigzutaten, die der Teig-Dosiereinrichtung zugeführt werden, können als Teig-Zustandsgrößen sensorisch erfasst werden. Als Steuer/Regelparameter der Steuer/Regeleinrichtung kann ein Parameter dienen, der aus mindestens einer und insbesondere aus mindestens zwei der sensorisch gemessenen Teig-Zustandsgrößen abgeleitet wird. Ein solcher Steuer/Regelparameter kann beispielsweise durch Vergleich zweier Teig-Zustandsgrößen, beispielsweise durch Vergleich mindestens zweier der Größen Teig-Elastizitätsparameter, Teig-Viskositätsparameter, Teig-Federkonstante, Teig-Dämpfungsparameter erhalten werden.

Die Vorteile eines Verfahrens nach Anspruch 8 entsprechen denen, die vorstehend unter Bezugnahme auf die Teigbearbeitungsanlage bereits erläutert wurden. Der Teigteilschritt und der Wirkschritt können in einer Teigteil- und Wirkeinrichtung der Teigbearbeitungsanlage in zusammengefasster Form durchgeführt werden. Zwischen dem Knetschritt und dem Teigteilschritt kann noch eine Vorportionierung einer gekneteten Teigmasse stattfinden, die mit einem Vorportionierer durchgeführt werden kann. Das Veredeln kann beispielsweise durch Bestreuung oder Stüpfeln stattfinden. Das Veredeln kann auch in Form einer Teigaufbereitung stattfinden. Eine Teigaufbereitung kann auch unabhängig vom Veredeln stattfinden.

Eine insbesondere prozessschrittübergreifende Steuerung/Regelung des Betriebs der Teigbearbeitungsanlage ist möglich, die auch in Bezug auf die Teigbearbeitungsanlage einrichtungsübergreifend ausgeführt sein kann.

Die Vorteile der Ansprüche 10 bis 12 entsprechen denen, die vorstehend unter Bezugnahme auf die Teigbearbeitungsanlage bereits erläutert wurden. Mittels der Teig-Kneteinrichtung als Signalgenerierungs-Teigbearbeitungseinrichtung können auch die Teig-Teileinrichtung, Teig-Wirkeinrichtung und/oder der Backofen oder eine sonstige Einrichtung zum Backen beziehungsweise Garen des Teigs gesteuert oder geregelt werden Dies gilt entsprechend auch für eine zusätzliche Teig-Aufbereitungseinrichtung.

Mittels der Teig-Teileinrichtung als der Signalgenerierungs-Teigbearbeitungseinrichtung können auch die Teig-Wirkeinrichtung und/oder der Backofen oder eine sonstige Einrichtung zum Backen beziehungsweise Garen des Teigs gesteuert oder geregelt werden. Dies gilt entsprechend auch für eine zusätzliche Teig-Aufbereitungseinrichtung.

Ein Backschritt nach Anspruch 13 vollendet das Teigbearbeitungsverfahren.

Zusätzlich nach Anspruch 14 erfasste Parameter können die Effizienz und die Qualität des Teigbearbeitungsverfahrens zusätzlich verbessern.

Insbesondere wurde erkannt, dass es mit einem Kammer-Drucksensor als Teil einer Teigportioniereinrichtung möglich ist, die Abhängigkeit einer auf eine Kammer-Bodenwand ausgeübten Kraft von einer Kraft zu messen, die ein Teig-Zuführkolben auf den Teig ausübt. Da der zwischen dem Teig-Zuführkolben einerseits und der Kammer-Bodenwand andererseits liegende Teig kräftemäßig als Feder zwischen dem Teig-Zuführkolben und der Kammer-Bodenwand verstanden werden kann, erlaubt ein derartiger Kräftevergleich einen Rückschluss auf eine Federkonstante des Teigs und somit auf einen Teigzustand.

Durch Messen des Drucks über den Kammer-Drucksensor kann dieser Druck geregelt innerhalb vorgegebener Toleranzgrenzen auf einem Druck-Sollwert gehalten werden. Dies verbessert eine Portionier- bzw. Dosiergenauigkeit der Teigportioniereinrichtung der Teigbearbeitungsvorrichtung. Die Teigbearbeitungsvorrichtung kann dann automatisch auf verschiedene Teigeigenschaften und insbesondere auf verschiedene Teig-Federkonstanten eingestellt beziehungsweise eingeregelt werden. Es kann dann insbesondere ein minimaler Kolbendruck eingestellt werden, den der Teig-Zuführkolben auf den Teig zum Erreichen eines Kammerdruck-Sollwerts ausübt, was den Teig beim Teilen, Portionieren bzw. Dosieren schont. Insbesondere ein Rückschluss auf Teigeigenschaften wie Viskosität und Elastizität ist möglich. Entsprechende Teigparameter, die über die Druckmessung über den Kammer-Drucksensor erhalten werden, können für eine prozessschrittübergreifende Steuerung/Regelung einer Teigbearbeitungsanlage, deren Teil die Teigbearbeitungsvorrichtung ist, genutzt werden. Der Kammer-Drucksensor stellt einen Portioniersensor der Teigbearbeitungsvorrichtung dar.

Bei der Ausführung der Teig-Teileinrichtung als Teigportioniereinrichtung mit einer Messkammer kann die Kammer-Bodenwand als Stirnwand eines Messkolbens ausgeführt sein, der in einem Messzylinder, dessen Teil die Messkammer ist, angeordnet ist. Der Messkolben kann dann verlagerbar sein zwischen einer rückgezogenen Messstellung, in der der Messkolben ein Messvolumen vorgibt, und einer ausgefahrenen Übergabestellung zur Übergabe einer im Messvolumen dosierten Teigportion an eine nachgeordnete Teig-Bearbeitungskomponente. Bei einer derartigen Messkolben-Ausführung von Portionierkomponenten der Teigportioniereinrichtung ist die Nutzung des Kammer-Drucksensors besonders vorteilhaft. Eine hohe Portioniergenauigkeit, besonders hinsichtlich eines Gewichts einer Teigportion bzw. eines Teiglings, kann erreicht werden.

Mit der Teigbearbeitungsanlage ist eine Prozessschrittübergreifende Steuerung oder Regelung der Teig-Bearbeitungskomponenten der Teigbearbeitungsanlage möglich. Die Steuer/Regeleinrichtung kann hierbei so ausgeführt sein, dass sie insbesondere über den Kammer-Drucksensor Teigparameter des Teigs erfasst bzw. identifiziert und den oder die jeweils erfassten bzw. identifizierten Teigparameter an die vorgeordnete Teig-Bearbeitungskomponente der Teigbearbeitungsanlage kommuniziert.

Ausführungsbeispiele der Erfindung werden nachfolgend anhand der Zeichnung näher erläutert. In dieser zeigen:
- Fig. 1: perspektivisch eine innere Details preisgebende Ansicht einer Teigbearbeitungsvorrichtung in Form einer Teigbearbeitungsmaschine, die eine Mehrzahl angetriebener Teig-Bearbeitungskomponenten aufweist, als Teil einer Teigbearbeitungsanlage;
- Fig. 2: schematisch einen vertikalen Längsschnitt durch einen Abschnitt der Teigbearbeitungsvorrichtung, über den eine Prozessführung bei einer Teigling-Portionierung veranschaulicht ist;
- Fig. 3: in einem Querschnitt gemäß Linie III-III in Fig. 2 eine Anordnung einer Messkolbenleiste und eines Leisten-Anschlagkörpers für diese Messkolbenleiste;
- Fig. 4: in einer Ausschnittsdarstellung der Fig. 2 Kräfte- bzw. Druckverhältnisse zwischen einem Teig-Zuführkolben der Teigbearbeitungsvorrichtung einerseits und einem Messkolben, angeordnet in einem Messzylinder einer Messtrommel der Teigbearbeitungsvorrichtung, andererseits;
- Fig. 5: ein Anschlagselement des Leisten-Anschlagskörpers Stärke im Detail in einer perspektivischen Ansicht;
- Fig. 6: das Anschlagselement nach Fig. 5 wiederum perspektivisch, gesehen in Gegenrichtung der Ansicht nach Fig. 5;
- Fig. 7: ein Ablaufschema eines Teigbearbeitungsverfahrens, welches mit der Teigbearbeitungsanlage, deren Teil die Teigbearbeitungsvorrichtung ist, durchgeführt wird; und
- Fig. 8: schematisch Hauptkomponenten der Teigbearbeitungsanlage.

Eine als Teigbearbeitungsmaschine ausgeführte Teigbearbeitungsvorrichtung 1 dient zur Herstellung einer Mehrzahl exakt portionierter bzw. dosierter und rundgewirkter Teiglinge, die beispielsweise nachfolgend zu Brötchen verarbeitet werden können. Die Teigbearbeitungsmaschine 1 ist sechsreihig ausgeführt.

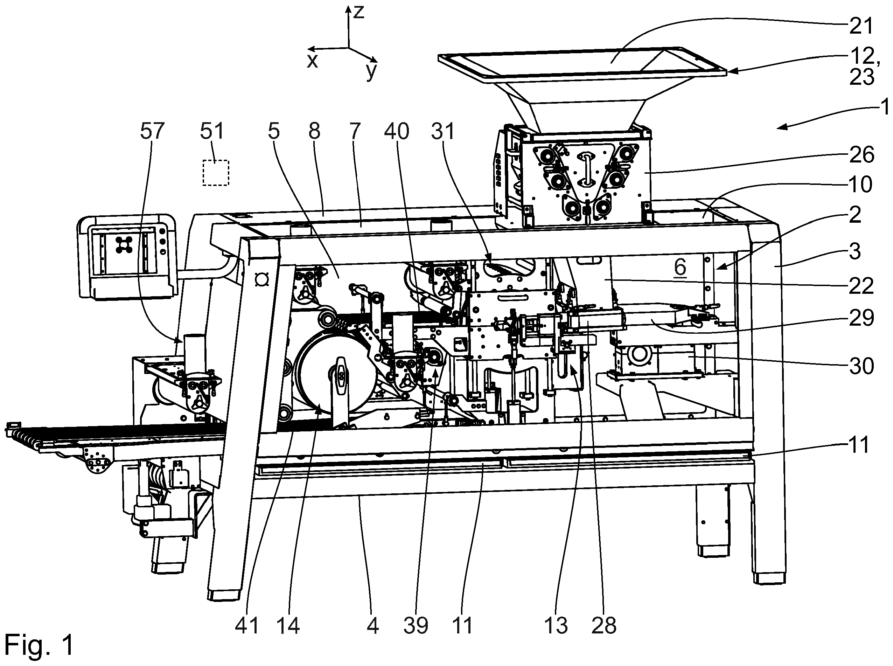

Zur Erleichterung der Beschreibung von Lagebeziehungen wird nachfolgend ein kartesisches xyz-Koordinatensystem verwendet. Die x-Richtung verläuft in der Fig. 1 längs einer horizontalen Förderrichtung der Teigbearbeitungsvorrichtung 1 und verläuft in der Fig. 1 nach links. Die y-Richtung verläuft ebenfalls horizontal und senkrecht zur Förderrichtung und verläuft in der Fig. 1 im Wesentlichen senkrecht zur Zeichenebene. Die z-Richtung verläuft vertikal und in der Fig. 1 nach oben.

Die Teigbearbeitungsmaschine 1 hat ein im Wesentlichen quaderförmiges Gehäuse 2 mit einem Gehäuserahmen 3. Ein Gehäuseboden 4 hat oberhalb eines Maschinenbodens eine erhebliche Bodenfreiheit im Bereich einiger zehn Zentimeter.

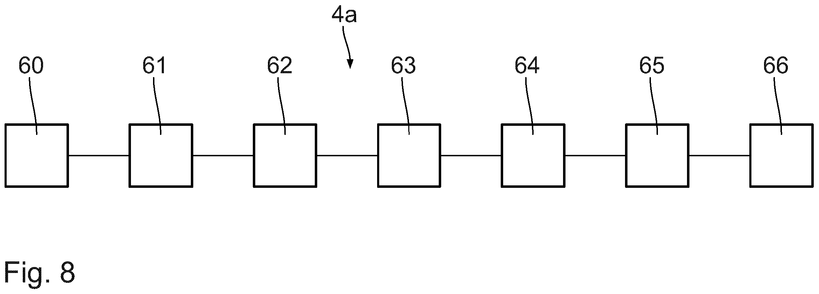

Die Teigbearbeitungsmaschine 1 hat eine Mehrzahl angetriebener Teig-Bearbeitungskomponenten, die nachfolgend noch beschrieben werden. Die Teigbearbeitungsmaschine 1 ist zudem Teil einer Teigbearbeitungsanlage 4a (vgl. Fig. 8). Ein Teigbearbeitungsverfahren, welches mit der Teigbearbeitungsanlage 4a durchgeführt werden kann, sowie Hauptkomponenten der Teigbearbeitungsanlage 4a werden nachfolgend ebenfalls noch beschrieben.

Weiterhin hat die Teigbearbeitungsmaschine 1 eine Mehrzahl von Antrieben, die mit diesen Teig-Bearbeitungskomponenten in mechanischer Antriebsverbindung stehen und die nachfolgend ebenfalls noch beschrieben werden. Eine zentrale Montageplatte 5 trägt einerseits, also zur einen Seite der Platte hin, die Teig-Bearbeitungskomponenten, also diejenigen Komponenten, die mit dem Teig in Berührung stehen, und andererseits, also zur anderen Plattenseite hin, die Antriebe für diese Teig-Bearbeitungskomponenten.

Die Montageplatte 5 ist so angeordnet, dass sie einen Innenraum 6 des Gehäuses 2 unterteilt in einen Teig-Bearbeitungsraum 7, in dem die Teig-Bearbeitungskomponenten untergebracht sind, und in einen Antriebsraum 8, in dem die Antriebe untergebracht sind. Antriebsverbindungen zwischen dem Teig-Bearbeitungsraum 7, der in der Fig. 1 dem Betrachter zugewandt ist, und dem Antriebsraum 8 verlaufen durch Durchtrittsöffnungen in der Montageplatte 5.

Die Montageplatte 5 ist vertikal stehend im Gehäuse 2 zwischen dem Gehäuseboden 4 und einem oberen Gehäusedeckel 10 angeordnet.

Auf dem Gehäuseboden 4 liegen insgesamt vier Auffangwannen 11 auf, von denen in der Fig. 1 zwei Auffangwannen 11 randseitig sichtbar sind. Die vier Auffangwannen 11 sind miteinander lösbar verbunden. Die Auffangwannen 11 sind von der Seite des Teig-Bearbeitungsraums 7 her von außen her zugänglich und können zur Entleerung aus dem Gehäuse 2 entnommen werden. Die Auffangwannen 11 dienen zum Auffangen von Teigresten, die bei der Teigbearbeitung im Teig-Bearbeitungsraum 7 anfallen.

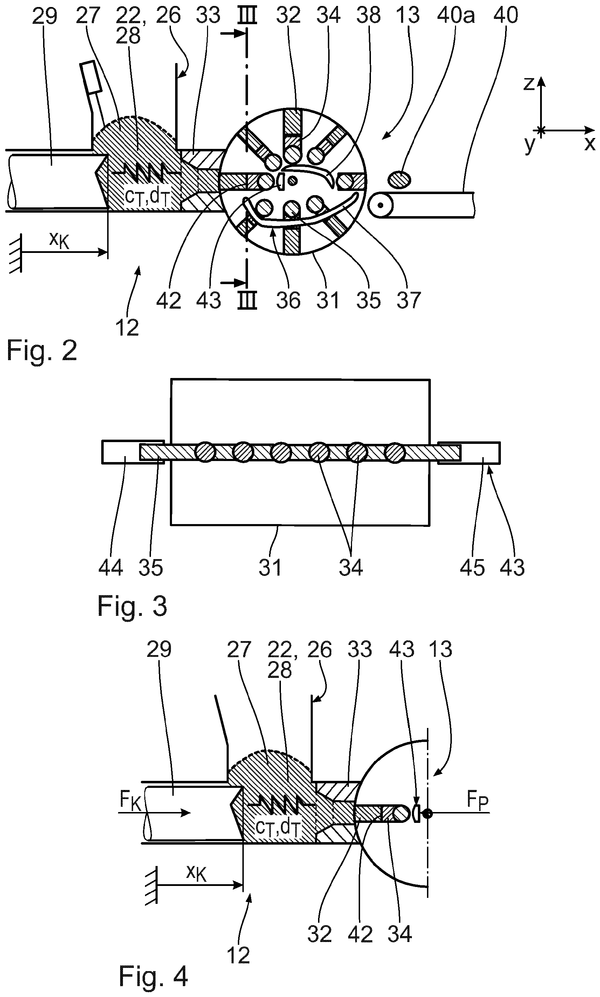

Die Teigbearbeitungsmaschine 1 hat folgende Teig-Bearbeitungskomponenten:
- eine Teigvorportioniereinrichtung 12 zur Vorportionierung von Teig für eine nachfolgende Teigbearbeitung. Die Teigvorportioniereinrichtung 12 wird auch als Vorportionierer bezeichnet.
- eine Teigportioniereinrichtung 13 (vgl. auch Fig. 2) zur Vorgabe jeweils eines genau portionierten bzw. dosierten Volumens der Teiglinge.
- eine Teigwirkeinrichtung 14 zum Rundwirken der portionierten bzw. dosierten Teiglinge.

Die tragenden Verbindungen der Teig-Bearbeitungskomponenten 13 und 14 einerseits und der zugeordneten Antriebe andererseits an der Montageplatte 5 sind in Balkonbauweise ausgeführt.

Die Teigvorportioniereinrichtung 12 hat eine Mehrzahl von Walzenpaaren (nicht dargestellt in der Fig. 1). Zwischen den jeweils um eine horizontale Drehachse antreibbaren Walzen jedes Walzenpaares ist jeweils ein horizontal verlaufender Teig-Förderspalt angeordnet.

Die Walzenpaare sind zum Fördern des Teigs zwischen einer oberen Teig-Zugabeöffnung 21 und einer unteren Teig-Abgabeöffnung 22 (vgl. Fig. 2) ausgebildet. Auf die Walzenpaar-Anordnung aufgesetzt ist ein Teig-Zugabetrichter 23. Dieser hat einen oberen Zugabeabschnitt mit erstem Trichterwinkel Ti und einen sich hieran anschließenden unteren Zugabeabschnitt mit zweitem Trichterwinkel T₂. Es gilt: T₂ > Ti. Der untere Zugabeabschnitt hat also steiler verlaufende Trichterwände als der obere Zugabeabschnitt.

Der Teig-Zugabetrichter 23 stellt einen Teig-Vorratsbehälter der Teigbearbeitungsvorrichtung 1 dar.

Die Walzenpaare sind von einem Gehäuse 26 der Teigvorportioniereinrichtung 12 aufgenommen. Das Gehäuse 26 ist so ausgeführt, dass die Komponenten der Teigvorportioniereinrichtung 12 zwischen der Teig-Zugabeöffnung 21 und der Teig-Abgabeöffnung 22 umschlossen sind.

Alle Walzen der Walzenpaare der Teigvorportioniereinrichtung 12 sind über einen gemeinsamen Antriebsmotor angetrieben.

Das unterste Walzenpaar der Teigvorportioniereinrichtung 12 ist mit zwei jeweils dreiflügligen Sternwalzen (nicht in der Fig. 1 dargestellt) ausgeführt. Die Sternwalzen erzeugen vorportionierte Teigstücke 27, die der nachfolgenden Teigportioniereinrichtung 13 zugeführt werden. Die vorportionierten Teigstücke fallen durch die Teig-Abgabeöffnung 22 in eine Teigkammer 28.

Zur Teigportioniereinrichtung 13 gehört weiterhin ein Teig-Zuführkolben 29 mit einem quaderförmigen Kolbenabschnitt. Der Teig-Zuführkolben 29 wird auch als Portionierkolben bezeichnet. Der Kolbenabschnitt des Teig-Zuführkolbens 29 ist komplementär zur Teigkammer 28 ausgeführt. Der Teig-Zuführkolben 29 wird über eine Linearführung längs seines horizontalen Kolbenhubs geführt. Eine Teig-Zuführrichtung verläuft dabei längs der positiven x-Richtung. Angetrieben ist der Teig-Zuführkolben 29 über einen Servoantrieb 30, der im Antriebsraum 8 des Gehäuses 2 angeordnet ist. Der Servoantrieb 30 ist ein Beispiel für einen elektrischen Antrieb des Teig-Zuführkolbens 29.

Weiterhin hat die Teigportioniereinrichtung 13 eine Messtrommel 31 mit einer Mehrzahl von Messkammern 32 (vgl. Fig 2). Die jeweilige Messkammer 32 wird auch als Messtrommelnapf bezeichnet.

Entsprechend der sechsreihigen Ausführung der Teigbearbeitungsmaschine 1 hat die Messtrommel 31 in Umfangsrichtung gleich verteilt insgesamt acht Kammersätze zu je sechs in y-Richtung nebeneinander liegenden Messkammern 32. Ein Antrieb der Messtrommel 31 um deren zentrale, horizontale Trommelachse erfolgt über einen Messtrommel-Antriebsmotor, der im Antriebsraum 8 untergebracht ist.

Im Teigförderweg zwischen der Teigkammer 28 und der Messtrommel 31 ist ein Mundstück 33 (vgl. Fig. 2) angeordnet. Ein Grundkörper des Mundstücks 33 in dem sechs Teigdurchtrittskanäle aufgeführt sind, ist aus PETP (Polyethylenterephthalat) gefertigt. Das Mundstück 33 kann als Teil der Teigkammer 28 verstanden werden.

Zur Teigportioniereinrichtung 13 gehört weiterhin eine Mehrzahl von Messkolben 34. Kolbenabschnitte der Messkolben 34 sind einteilig aus Kunststoff. Jeweils genau einer der Messkolben 34 ist genau einer der Messkammern 32 zur Vorgabe eines Messkammervolumens für die Teigportionierung zugeordnet. Die jeweilige Messkammer 32 ist zudem Teil eines Messzylinders zur Führung des jeweiligen Messkolbens 34. Jeweils sechs nebeneinander liegende Messkolben 34 bilden einen Messkolbensatz, der einem der Kammersätze der Messkammern 32 zugeordnet ist. Die sechs Messkolben 34 jedes Kolbensatzes werden von einer Messkolbenleiste 35 (vgl. auch Fig. 3) getragen, die radial innerhalb der Messtrommel 31 angeordnet sind.

Die Messkolben 34 sind gesteuert verlagerbar zwischen einer zurückgezogenen Messstellung, in der die Messkolben 34 das Messkolbenvolumen zur Teigportionierung beziehungsweise Teigdosierung vorgeben, und einer radial ausgefahrenen Übergabestellung zur Übergabe des im Messkolbenvolumen portionierten bzw. dosierten Teigvolumens (Teigling 40a) an die nachgeordnete Teig-Bearbeitungskomponente, nämlich an die Teigwirkeinrichtung 14. Zu dieser gesteuerten Verlagerung der Messkolben 34 dient eine Kulissenführung 36 mit Kurvensegmenten 37, 38, die an nicht dargestellten Kulissen-Tragplatten montiert sind und die auch als Kulissenelemente bezeichnet sind.

Zwischen einer in der Fig. 1 links dargestellten Übergabeseite der Messtrommel 31 und der Teigwirkeinrichtung 14 ist im Teigförderweg der Teigbearbeitungsmaschine 1 eine Übergabeeinheit 39 mit einem Übergabeförderband 40 (vgl. auch Fig. 2) angeordnet.

Ein Antrieb der Übergabeeinheit 39 erfolgt über mindestens einen Antriebsmotor, der im Antriebsraum 8 des Gehäuses 2 untergebracht ist.

Ein Antrieb der Teigwirkeinrichtung 14 erfolgt über mehrere, nämlich über bis zu drei Antriebsmotoren, die im Antriebsraum 8 des Gehäuses 2 untergebracht sind.

Von der Teigwirkeinrichtung 14 werden die dann rundgewirkten Teiglinge 40a über ein weiteres Förderband 41 einer weiteren Bearbeitung, insbesondere einem Gärprozess und einem Backofen der Teigbearbeitungsanlage 4a zugeführt.

Zum Reinigen der Teig-Bearbeitungskomponenten können diese durch Verlagerung bzw. Demontage von Einzelkomponenten zugänglich gemacht werden.

Die jeweilige Messkammer 32 hat eine Kammer-Bodenwand 42, die bei der Teigdosierung (vgl. Fig. 4) dem Teig-Zuführkolben 29 gegenüberliegt. Dieser Kammer-Boden 42 ist durch eine stirnseitige Kolbenwand des Messkolbens 34 gebildet.

Der Teig-Zuführkolben 29 ist verlagerbar zwischen einer rückgezogenen Aufgabestellung zur Teigaufgabe des Teigstücks 27 aus dem Teig-Vorratsbehälter 23 und einer vorgeschobenen Förderstellung zum Fördern des Teigs des Teigstücks 27 in die jeweilige Messkammer 32 bis zu einer Messstellung des Messkolbens 34, in der die gewünscht dosierte Teigmenge in der Messkammer 32 vorliegt. In den Figuren 2 und 4 ist der Teig-Zuführkolben 29 jeweils in einer Zwischenstellung zwischen dieser rückgezogenen Aufgabestellung und dieser vorgeschobenen Förderstellung gezeigt.

In der Messstellung des jeweiligen Messkolbens 34 schlägt die Messkolbenleiste 35 an einem Leisten-Anschlagskörper 43 mit Anschlagselementen 44, 45 an. Die beiden Anschlagselemente 44, 45 sind axial außerhalb der Messtrommel 31 angeordnet und wirken mit Endstummeln der Messkolbenleiste 35 beim Anschlagen axial beiderseits der Messtrommel 31 zusammen. Die Anschlagselemente 44, 45 sind rahmenfest an einem Rahmen der Teigbearbeitungsvorrichtung 1 montiert.

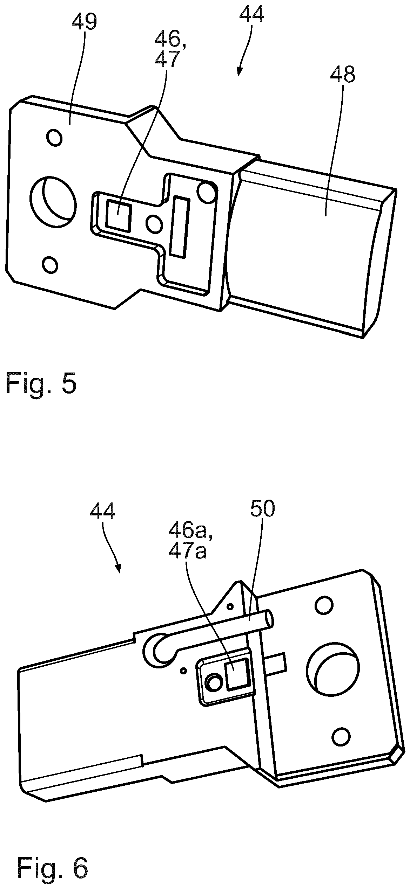

Fig. 5 und 6 zeigen das Anschlagselement 44 des Leistenanschlagskörpers 43 im Detail. Das weitere Anschlagselement 45 ist spiegelbildlich zum Anschlagselement 44 ausgeführt.

Das Anschlagselement 44 hat Dehnungsmessstreifen 46, 47, die in eine entsprechende Aufnahme des Anschlagselements 44 eingebracht sind, die zwischen einem Anschlagsabschnitt 48 und einem Rahmen-Montageabschnitt 49 des Anschlagselements 44 angeordnet ist.

Auf der Rückseite des Anschlagselements 44 sind gegenüberliegend zu den Dehnungsmessstreifen 46, 47 zwei weitere Dehnungsmessstreifen 46a, 47a in einer entsprechenden, rückseitigen Ausnehmung des Anschlagselements 44 angeordnet. Rückseitig ist zudem noch ein Verbindungskabel 50 zur Signalverbindung der Dehnungsmessstreifen 46, 47, 46a, 47a hin zu einer zentralen Steuer/Regeleinrichtung 51 der Teigbearbeitungsvorrichtung 1 geführt.

Über den Kammer-Drucksensor, also die Dehnungs-Messstreifen 46, 47, 46a, 47a wird eine Biegebelastung der Anschlagselemente 44, 45 des Leisten-Anschlagskörpers 43 gemessen. Die Dehnungsmessstreifen 46, 47 messen dabei die Biegebelastung auf einer zugbelasteten und die Dehnungsmessstreifen 46a, 47a messen die Biegebelastung auf einer druckbelasteten Seite des jeweiligen Anschlagselements 44, 45.

Die Dehnungsmessstreifen 46, 47 bzw. 46a, 47a dienen als Kammer-Drucksensor zum Messen eines Drucks beziehungsweise einer Kraft, den der Teig-Zuführkolben 29 über den Teig des Teigstücks 27 auf die Kammer-Bodenwand 42, also auf den jeweiligen Messkolben 34 in der Teigportionierstellung beziehungsweise Teigdosierstellung ausübt. Gemessen wird ein Druck beziehungsweise eine Kraft, den der jeweilige Endstummel der Messkolbenleiste 35 auf das jeweilige Anschlagselement 44, 45 des Leisten-Anschlagskörpers 43 ausübt.

Fig. 4 verdeutlicht entsprechende Kräfteverhältnisse: Dargestellt ist der Teig-Zuführkolben 29 in einer Kolbenstellung, bei der eine führende Kolbenwand bei einer x-Koordinate x_{K} liegt. Der Teig-Zuführkolben 29 übt dabei auf den vorportionierten Teig eine Kraft F_{K} aus. Die Kraft F_{K} ist in positiver x-Richtung gerichtet. Der Teig des Teigstücks 27 wirkt zwischen dem Teig-Zuführkolben 29 und dem in der Messstellung angeordneten Messkolben 34 als Federelement, was in der Fig. 4 durch eine Federkonstante er veranschaulicht ist. Zudem wirkt der Teig zwischen dem Teig-Zuführkolben 29 und dem Messkolben 34 als Dämpfungselement mit einem Dämpfungsparameter d_{T}. Vermittelt über dieses Federelement er führt die Kolbenkraft F_{K} des Teig-Zuführkolbens 29, sobald die Messkolbenleiste 35 am Leisten-Anschlagskörper 43 anschlägt, zu einer Gegenkraft F_{P}, die von der Messkolbenleiste 35 auf die Anschlagselemente 44, 45 des Leisten-Anschlagskörpers 43 ausgeübt wird. Die Gegenkraft F_{P} ist in negativer x-Richtung gerichtet.

Diese Gegenkraft bzw. Anschlagskraft F_{P} kann über die Dehnungsmessstreifen 46, 47 sowie 46a, 47a, also über den Kammer-Drucksensor, gemessen werden. Diese Anschlagskraft F_{P} kann einerseits als Maß für das Erreichen der Messstellung des Messkolbens 34 herangezogen werden. Zudem kann eine Abhängigkeit der Gegenkraft F_{P} von der Kolbenkraft F_{K} als Maß für die Federkonstante er und somit als Maß für einen Zustand des Teigs des Teigstücks 27 herangezogen und ausgewertet werden. Auch ein Rückschluss auf die Dämpfung d_{T} kann aus der Abhängigkeit der Gegenkraft F_{P} von der Kolbenkraft F_{K} gezogen werden.

Die Kolbenkraft F_{K} kann über einen entsprechenden Kolben-Drucksensor gemessen werden. Ein solcher Kolben-Drucksensor kann über eine Strommessung des Servoantriebs 30 des Teig-Zuführkolbens 29 erfolgen.

Bei einer nicht dargestellten Ausführung der Teigbearbeitungsvorrichtung 1 kann der Kammer-Drucksensor auch an der Messkolbenleiste 35 im Bereich der Endstummel, die am Leisten-Anschlagskörper 43 anschlagen, angeordnet sein.

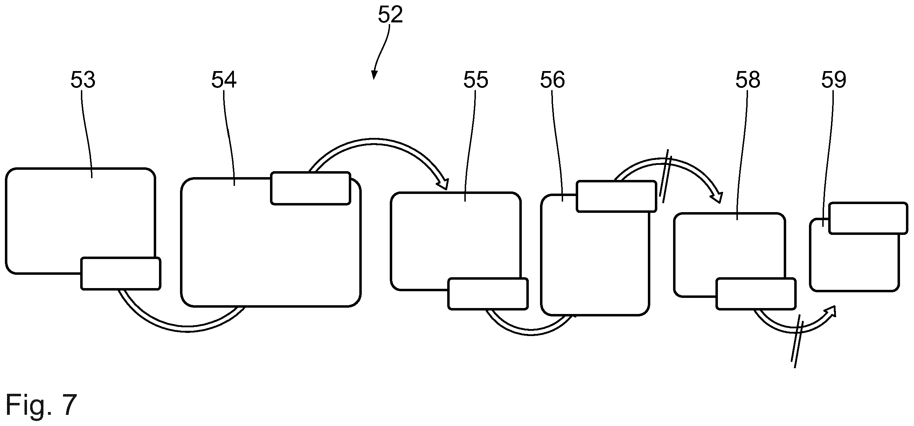

Fig. 7 zeigt schematisch ein gesamtes Teigbearbeitungsverfahren, welches mit der Teigbearbeitungsanlage 4a, deren Teil die Teigbearbeitungsvorrichtung 1 ist, durchgeführt werden kann.

Zu diesem gesamten Teigbearbeitungsverfahren 52 gehört ein Dosierschritt 53, der mittels einer Teigmischvorrichtung durchgeführt wird, die eine Teigbearbeitungskomponente darstellt, die der Teigbearbeitungsvorrichtung 1 vorgeordnet ist. Relevante Parameter für den Dosierschritt 53 sind eine Luftfeuchte, Temperaturen der Teigzutaten, ein Stärke- und/oder Fettgehalt von Mehl als Teigbestandteil sowie ein Mehl-Mischungsverhältnis.

An den Dosierschritt 53 schließt sich ein Knetschritt 54 an, der mit einer Knetvorrichtung durchgeführt wird, die der Mischvorrichtung nachgeordnet und der Teigbearbeitungsvorrichtung 1 vorgeordnet ist. Parameter, die den Knetschritt 54 beeinflussen, sind die zu knetende Teigmenge, eine Energieaufnahme beim Kneten, eine Teigtemperatur beim Kneten, eine Mischzeit, die insbesondere beim Dosierschritt 53 aufgewandt wurde, eine Knetzeit insbesondere beim Knetschritt 54 sowie gegebenenfalls eine Ruhezeit des Teigs zwischen dem Dosierschritt 53 und dem Knetschritt 54. Ein weiterer Parameter des Knetschritts 54 kann ein Vorhandensein von freiem Oberflächenwasser auf dem zu knetenden Teig sein.

An den Knetschritt 54 schließt sich ein Teigteil- und Wirkschritt 55 an, der mit der Teigbearbeitungsvorrichtung 1 durchgeführt wird. Parameter, die den Teil-/Wirkschritt 55 beeinflussen, sind das Teiggewicht der jeweils dosierten Teigportion und/oder des jeweiligen Teigstücks 27. Weitere Parameter, die den Teil-/Wirkschritt 55 beeinflussen, sind ein Arbeitsdruck, also die Kolbenkraft F_{K}, die die Soll-Gegenkraft F_{P} erzeugt, eine Wirkintensität, die über einen entsprechenden Antrieb der Teigwirkeinrichtung 14 erfasst werden kann, sowie eine Geometrie des jeweiligen Teiglings 40a.

An dem Teil-/Wirkschritt 55 schließt sich beim Teigbearbeitungsverfahren 52 ein Form-/Veredelungsschritt 56 beziehungsweise ein Aufbereitungsschritt an. Hierbei wird der Teigling 40a geformt und gegebenenfalls durch Zugabe weiterer Zusatzkomponenten, wie zum Beispiel einer Bestreuung, veredelt. Auch ein Stüpfeln des Teiglings 40a kann Teil des Form-/Veredelungsschritts 56 sein. Parameter, die den Form-/Veredelungsschritt 56 beeinflussen, sind eine Geometrie des Teiglings 40a sowie eine Position und eine Geometrie des Teiglings 40a während der Veredelung.

Der Form-/Veredelungsschritt 56 wird von einer Teig-Bearbeitungskomponente der Teigbearbeitungsanlage 4a durchgeführt, die der Teigbearbeitungsvorrichtung 1 nachgeordnet ist. Eine Baugruppe dieser nachgeordneten Teig-Bearbeitungskomponente ist in der Fig. 1 bei 57 angedeutet.

An den Form-/Veredelungsschritt 56 schließt sich ein Lager-/Gärschritt 58 an, der in einem Gärschrank der Teigbearbeitungsanlage 4a durchgeführt wird, der wiederum eine der Teigbearbeitungsvorrichtung 1 nachgeordnete Teig-Bearbeitungskomponente darstellt. Parameter, die diesen Lager-/Gärschritt 58 beeinflussen, sind eine Teigtemperatur des Teiglings 40a zu Beginn des Lager-/Gärschritts 58, eine Teigling-Temperatur am Ende des Lager-/Gärschritts 58, eine Lager-/Gärzeit sowie eine Volumenveränderung des Teiglings 40a während des Lager-/Gärschritts 58.

An dem Lager-/Gärschritt 58 schließt sich beim gesamten Teigverarbeitungsverfahren 52 ein Backschritt 59 an, bei dem es sich auch um einen Garschritt beziehungsweise Frittierschritt handeln kann und der in einem Backofen beziehungsweise einer sonstigen Backeinrichtung oder Fritteuse der Teigbearbeitungsanlage 4a durchgeführt wird, der wiederum eine der Teigbearbeitungsvorrichtung 1 nachgeordnete Teig-Bearbeitungskomponente darstellt. Parameter, die den Backschritt 59 beeinflussen, sind die Backtemperatur, die Backzeit sowie ein Typ des den Backschritt 59 durchführenden Backofens.

Fig. 8 zeigt Hauptkomponenten der Teigbearbeitungsanlage 4a.

Zur Teigbearbeitungsanlage 4a gehört eine Teig-Dosiereinrichtung beziehungsweise Teigmischeinrichtung 60, mit der der Dosierschritt 53 des Teigbearbeitungsverfahrens 52 durchgeführt wird. Weiterhin gehört zur Teigbearbeitungsanlage 4a eine Teig-Kneteinrichtung 61, mit der der Knetschritt 54 durchgeführt wird. Ein Beispiel für die Kneteinrichtung 61 ist beschrieben in der EP 3 613 290 A1.

Weiterhin gehört zur Teigbearbeitungsanlage 4a eine Teig-Teileinrichtung 62, mit der ein Teilschritt des Teig-Teilschritts 55 durchgeführt wird, sowie eine Teig-Wirkeinrichtung 63, mit der ein Wirkschritt des Teig-Teilschritts 55 durchgeführt wird. Ein Beispiel für eine Ausführung der Teig-Teileinrichtung 62 ist die Teilportioniereinrichtung 13, die vorstehend zusammen mit den Fig. 1 bis 7 erläutert wurde. Die Teig-Teileinrichtung 62 und die Teig-Wirkeinrichtung 63 können in einer zusammengefassten Teigteil- und Wirkeinrichtung beispielsweise in Form der Teigbearbeitungsvorrichtung 1 nach Fig. 1 zusammengefasst werden und führen dann zusammen den Teig-Teilschritt 55 des Betriebsverfahrens durch.

Weiterhin gehört zur Teigbearbeitungsanlage 4a eine Teigportions-Veredelungseinrichtung 64, mit der der Form/Veredelungsschritt 56 durchgeführt wird. Teileinheiten dieser Teigportions-Veredelungseinrichtung 64 können sein eine Bestreueinheit oder eine Stüpfeleinheit. Eine beispielhafte Baugruppe der Teigportions-Veredelungseinrichtung 64 ist die in der Fig. 1 bei 57 angedeutete Baugruppe.

Weiterhin gehört zur Teigbearbeitungsanlage 4a eine Teig-Gäreinrichtung 65, beispielsweise in Form eines Gärschranks. Mit der Teig-Gäreinrichtung 65 wird der Lager/Gärschritt 58 durchgeführt.

Weiterhin kann zur Teigbearbeitungsanlage 4a eine in der Zeichnung nicht näher dargestellte Teig-Aufbereitungseinrichtung gehören, die der Aufbereitung des Teiges dient. Auch die Teig-Aufbereitungseinrichtung kann als Signalgenerierungs-Teigbearbeitungseinrichtung und/oder als Signalempfangs-Teigbearbeitungseinrichtung dienen.

Weiterhin gehört zur Teigbearbeitungsanlage 4a ein Backofen 66, mit dem der Backschritt 59 durchgeführt wird. Anstelle des Backofens 66 kann auch eine Fritteuse zur Teigbearbeitungsanlage gehören oder auch eine andere Einrichtung zum Garen beziehungsweise Backen des Teigs.

Mit Hilfe der Kneteinrichtung 61 kann mindestens eine Teig-Zustandsgröße beziehungsweise ein Teigparameter sensorisch erfasst werden. Bei dieser sensorisch über die Teig-Kneteinrichtung 61 erfassbaren Teig-Zustandsgröße handelt es sich um einen Teig-Elastizitätsparameter c_{d} und um einen Teig-Viskositätsparameter d_{d}. Details zur Bestimmung dieser Parameter c_{d} und d_{d} sind aufgeführt in der EP 3 613 290 A1. Bei der Teig-Kneteinrichtung 61 handelt es sich um eine Signalgenerierungs-Teigbearbeitungseinrichtung mit mindestens einem Sensor zum Messen mindestens einer Teig-Zustandsgröße.

Eine weitere derartige Signalgenerierungs-Teigbearbeitungseinrichtung mit mindestens einem Sensor zum Messen mindestens einer Teig-Zustandsgröße ist die Teig-Teileinrichtung 62 beziehungsweise Teig-Portioniereinrichtung 13 der Teigbearbeitungsvorrichtung 1. Mit der Teigportioniereinrichtung 13 können sensorisch die Teig-Zustandsgrößen Teig-Federkonstante er und Teig-Dämpfungsparameter d_{T} erfasst werden. Mit Hilfe einer Auswertung, die derjenigen entspricht, die in der EP 3 613 290 A1 beschrieben ist, kann auch mit der Teig-Teileinrichtung 62 beziehungsweise der Teig-Portoniereinrichtung 14 der Teigbearbeitungsvorrichtung 1 der Teig-Elastizitätsparameter c_{d} und/oder der Teig-Viskositätsparameter d_{d} gemessen, also sensorisch erfasst werden.

Die Teigbearbeitungsanlage 4a hat zudem Sensoren beziehungsweise Messgeräte zum Messen mindestens einer der nachfolgenden Teig-Zustandsgrößen:
- Teig-Temperatur vor, beim oder nach dem jeweiligen Bearbeitungsschritt,
- Teig-Dichte,
- Teig-Feuchtigkeit,
- Stärkegehalt von Mehl als Teigbestandteil,
- Fettgehalt des Teiges,
- Mehl-Mischungsverhältnis des Teiges,
- zu knetende Teigmenge,
- Energieaufnahme beim Teigkneten,
- Teig-Mischzeit in der Teig-Dosiereinrichtung 60 und/oder in der Teig-Kneteinrichtung 61,
- Teig-Knetzeit,
- Teig-Ruhezeit zwischen dem Dosieren in der Teig-Dosiereinrichtung 60 und dem Kneten in der Teig-Kneteinrichtung 61,
- freies Oberflächenwasser auf dem Teig beim Kneten in der Teig-Kneteinrichtung,
- Gewicht einer Teigportion,
- Teig-Arbeitsdruck beim Teigportionieren in der Teig-Teileinrichtung 61,
- Wirkintensität beim Teig-Wirken in der Teig-Wirkeinrichtung 63,
- Geometrie einer Teigportion,
- Teig-Gärzeit,
- Teig-Volumenänderung während des Gärens in der Teig-Gäreinrichtung 65,
- Backtemperatur,
- Backzeit,
- Backofentyp des Backofens 66,
- Teig-pH-Wert,
- Teig-Adhäsionsparameter.

Zur Erfassung des freien Oberflächenwassers auf dem Teig beim Kneten in der Teig-Kneteinrichtung 61 kann insbesondere ein optischer Sensor dienen.

Der Teig-pH-Wert kann insbesondere optisch vermessen werden.

Der Teig-Adhäsionsparameter kann indirekt oder auch direkt bei einer Teig-Vorportionierung oder einer Teigportionierung oder auch durch Auswertung einer beim Bemehlen eingesetzten Mehlmenge ermittelt werden. Ein Rückschluss auf den Teig-Adhäsionsparameter kann auch durch eine Vermessung von Teigportions-Trajektorien an Fallstufen der Teigportionen längs eines Teigportionswegs innerhalb der Teigbearbeitungsanlage gezogen werden.

Die Teigparameter, die für die Teigbearbeitungsschritte 53 bis 56, 58, 59 relevant sind, können mit entsprechenden Sensoren ermittelt und/oder über Algorithmen der Steuer/Regeleinrichtung 51, gegebenenfalls unter Hinzunahme von Sensordaten, berechnet werden. Derart erfasste Teigparameter können dann mit Hilfe der Steuer/Regeleinrichtung 51 für eine prozessschrittübergreifende Steuerung/Regelung der Teigbearbeitungsanlage 4a genutzt werden. Diese Steuerung/Regelung kann in Vorwärtsrichtung erfolgen, sich über einen erfassten Teigparameter also auf die Steuerung einer nachgeordneten Teig-Bearbeitungskomponente der Teigbearbeitungsanlage 4a richten. Erfindungsgemäß verläuft die Steuerung/ Regelung in Rückwärtsrichtung, richtet sich also über den erfassten Teigparameter an eine vorgeordnete Teig-Bearbeitungskomponente der Teigbearbeitungsanlage 4a. Die Begriffe "nachgeordnet" und "vorgeordnet" beziehen sich jeweils auf die Relation zur Teig-Bearbeitungskomponente, die dem erfassten Teigparameter zugeordnet ist.

Im Rahmen des Teigbearbeitungsverfahrens 52 kann beispielsweise die Teig-Kneteinrichtung 61 als Signalgenerierungs-Teigbearbeitungseinrichtung dienen. Mit Hilfe dieser Teig-Kneteinrichtung 61 und der Steuer/Regeleinrichtung 51 können dann auf Grundlage der beispielsweise gemessenen Teigparameter c_{d}, d_{d} die Teig-Dosiereinrichtung 60, die Teigportions-Veredelungseinrichtung oder die Teigportions-Gäreinrichtung 65 gesteuert oder geregelt werden.

Sensoren der Teig-Kneteinrichtung 61 können sein eine Drehmoment-Messeinheit, eine Drehzahl-Messeinheit oder eine Drehpositions-Messeinheit sowie ein Temperatursensor oder ein Zustandssensor. Diesbezüglich wird verwiesen auf die EP 3 613 290 A1.

Auch die Teig-Teileinrichtung 62, die Teig-Wirkeinrichtung 63 und der Backofen 66 können mit Hilfe der sensorisch über die Teig-Kneteinrichtung 61 erfassten Teigparameter gesteuert oder geregelt werden. So kann beispielsweise eine Gärtemperatur, eine Gärfeuchtigkeit oder auch eine Gärzeit an die erfassten Parameter Teig-Elastizität c_{d} und Teig-Viskosität d_{d} angepasst werden. Auch die Backzeit oder auch ein Mischungsverhältnis in der Teig-Dosiereinrichtung 60 können abhängig von diesen erfassten Teigparametern c_{d}, d_{d} variiert werden. Entsprechendes gilt für eine Wirkdauer oder eine Wirkintensität.

Wie vorstehend bereits erläutert, kann auch die Teig-Teileinrichtung 62, beispielsweise in Form der Teigportioniereinrichtung 13, als Signalgenerierungs-Teigbearbeitungseinrichtung des Betriebsverfahrens dienen. Mit den über die Teigportioniereinrichtung 13 erfassbaren Teigparametern Federkonstante er und Dämpfungsparameter d_{T} können dann mit Hilfe der Steuer/Regeleinrichtung 51 die Teig-Dosiereinrichtung 60, die Teig-Kneteinrichtung 61, die Teig-Portionierungs-Veredelungseinrichtung 64 oder die Teigportionierungs-Gäreinrichtung 65 gesteuert oder geregelt betrieben werden. Dies gilt entsprechend auch für die Teig-Wirkeinrichtung 63 und den Backofen. Über die sensorisch erfassten Teigparameter Federkonstante er und Dämpfungsparameter d_{T} kann also beispielsweise im Rahmen einer Rückwärtsregelung eine Knetzeit oder auch ein Mischungsverhältnis beim Dosierschritt 53 gesteuert oder geregelt vorgegeben werden. Im Rahmen einer Vorwärtsregelung kann beispielsweise eine Gärzeit oder eine Backzeit vorgegeben werden.

Im Rahmen des Betriebsverfahrens 52 umstellbare Arbeitszustände der Dosiereinrichtung 60 ergeben sich beispielsweise aus unterschiedlichen Dosierzeiten, die über Dosierventile vorgegeben werden können.

Unterschiedliche umstellbare Arbeitszustände der Kneteinrichtung 61 ergeben sich aus unterschiedlichen Drehzahlen oder Positionen oder auch unterschiedlichen vorgebbaren Trajektorien eines Knetwerkzeugs der Kneteinrichtung 61.

Unterschiedliche umstellbare Arbeitszustände der Teig-Teileinrichtung 62 ergeben sich zum Beispiel aus unterschiedlichen Messpositionen des Messkolbens oder auch aus unterschiedlichen Trajektorien der jeweiligen Teigportion an einer Fallstufe innerhalb der Teigbearbeitungsanlage. Auch unterschiedliche Drehmomentprofile von Antriebskomponenten der Teig-Teileinrichtung 62, insbesondere des Zuführkolbens, ergeben unterschiedliche umstellbare Arbeitszustände.

Unterschiedliche umstellbare Arbeitszustände der Teig-Wirkeinrichtung 63 ergeben sich aus unterschiedlichen Wirkdruck-Zuständen oder auch aus unterschiedlichen Wirkgeschwindigkeits-Vorgaben oder auch aus unterschiedlichen Wirkamplituden beziehungsweise Wirkausschlägen.

Unterschiedliche umstellbare Arbeitszustände der Teig-Veredelungseinrichtung 64 ergeben sich unterschiedlichen Befeuchtungsintensitäten, aus unterschiedlichen vorgebbaren Bestreuintensitäten und/oder Stüpfeltiefen und/oder Stüpfeltypen. Auch unterschiedliche Bemehlungsintensitäten können als umstellbare Arbeitszustände der Teig-Veredelungseinrichtung beziehungsweise der Teig-Aufbereitungseinrichtung vorgegeben werden.

Unterschiedliche umstellbare Arbeitszustände der Teig-Gäreinrichtung 65 ergeben sich aus unterschiedlichen Gärzeiten, also beispielsweise unterschiedlichen Fördergeschwindigkeiten von Gärgut-Gehängen innerhalb eines Gärschranks. Auch unterschiedliche Gärraumtemperaturen beziehungsweise unterschiedliche Gärraumfeuchtigkeiten können umstellbare Arbeitszustände der Teig-Gäreinrichtung 65 sein.

Unterschiedliche umstellbare Arbeitszustände des Backofens 66 oder der Back- beziehungsweise Gareinrichtung ergeben sich beispielsweise aus unterschiedlichen Backprogrammen des Backofens 66.

## Patentansprüche

1. Teigbearbeitungsanlage (4a)
- mit mindestens zwei der nachfolgenden Teigbearbeitungseinrichtungen:
- Eine Teig-Dosiereinrichtung (60) zur dosierten Zugabe von zu mischenden Teigzutaten,
- eine Teig-Kneteinrichtung (61) zum Kneten eines Teiges aus vorbereiteten Teigzutaten,
- eine Teigportions-Veredelungseinrichtung (64) für vorbereitete Teigportionen,
- eine Teigportions-Gäreinrichtung (65) für vorbereitete Teigportionen,
- wobei mindestens eine der mindestens zwei Teigbearbeitungseinrichtungen als Signalgenerierungs-Teigbearbeitungseinrichtung (61) mit mindestens einem Sensor zum Messen mindestens einer Teig-Zustandsgröße ausgeführt ist,
- wobei mindestens eine andere der mindestens zwei Teigbearbeitungseinrichtung als Signalempfangs-Teigbearbeitungseinrichtung (60, 64, 65) mit mindestens einer Bearbeitungskomponente ausgeführt ist, die zwischen mehreren Arbeitszuständen gesteuert umstellbar ist,
- wobei die Teigbearbeitungsanlage eine Steuer/Regeleinrichtung (51) aufweist, die mit dem mindestens einen Sensor der mindestens einen Signalgenerierungs-Teigbearbeitungseinrichtung (61) und mit der mindestens einen Signalempfangs-Teigbearbeitungseinrichtung (60, 64, 65) in Signalverbindung steht,
**dadurch gekennzeichnet, dass**
es sich bei der Signalgenerierungs-Teigbearbeitungseinrichtung (61) um eine der Signalempfangs-Teigbearbeitungseinrichtung (60) nachgeordnete Teigbearbeitungseinrichtung handelt.

2. Teigbearbeitungsanlage nach Anspruch 1, **dadurch gekennzeichnet, dass** die Teigbearbeitungsanlage mehrere Signalgenerierungs-Teigbearbeitungseinrichtungen und/oder mehrere Signalempfangs-Teigbearbeitungseinrichtungen aufweist, die im Betrieb der Teigbearbeitungsanlage miteinander über die Steuer/Regeleinrichtung im Rahmen einer Steuerung und/oder Regelung zusammenwirken..

3. Teigbearbeitungsanlage nach Anspruch 1 oder 2, **gekennzeichnet durch** mindestens eine weitere der nachfolgenden Teigbearbeitungseinrichtungen:
- Eine Teig-Teileinrichtung (62; 13) zum Portionieren vorbereiteten Teigs,
- eine Teig-Wirkeinrichtung (63) für vorbereitete Teigportionen,
- ein Backofen (66) für vorbereitete Teigportionen.

4. Teigbearbeitungsanlage nach Anspruch 3, **dadurch gekennzeichnet, dass** es sich bei der Signalgenerierungs-Teigbearbeitungseinrichtung (61; 62; 13) um eine der Signalempfangs-Teigbearbeitungseinrichtung (62 bis 66; 63 bis 66) vorgeordnete Teigbearbeitungseinrichtung handelt.

5. Teigbearbeitungsanlage nach einem der Ansprüche 1 bis 4, **dadurch gekennzeichnet, dass** es sich bei der Signalgenerierungs-Teigbearbeitungseinrichtung um die Teig-Kneteinrichtung (61) handelt.

6. Teigbearbeitungsanlage nach einem der Ansprüche 1 bis 5, **dadurch gekennzeichnet, dass** es sich bei der Signalgenerierungs-Teigbearbeitungseinrichtung um die Teig-Teileinrichtung (62; 13) handelt.

7. Teigbearbeitungsanlage nach einem der Ansprüche 1 bis 6, **dadurch gekennzeichnet, dass** es sich bei der gemessenen Teig-Zustandsgröße um mindestens eine der folgenden Größen handelt:
- Ein Teig-Elastizitätsparameter (c_{d}),
- ein Teig-Viskositätsparameter (d_{d}),
- eine Teig-Federkonstante (c_{T}),
- ein Teig-Dämpfungsparameter (d_{T}),
- eine Teig-Temperatur vor, beim oder nach dem jeweiligen Bearbeitungsschritt,
- eine Teig-Dichte,
- eine Teig-Feuchtigkeit,
- ein Stärkegehalt von Mehl als Teigbestandteil,
- ein Fettgehalt des Teigs,
- ein Mehl-Mischungsverhältnis des Teigs,
- eine zu knetende Teigmenge,
- eine Energieaufnahme beim Teigkneten,
- eine Teig-Mischzeit in der Teig-Dosiereinrichtung (60) und/oder in der Teig-Kneteinrichtung (61),
- eine Teig-Knetzeit,
- eine Teig-Ruhezeit zwischen dem Dosieren in der Teig-Dosiereinrichtung (60) und dem Kneten in der Teig-Kneteinrichtung (61),
- eine Teig-Ruhezeit nach dem Kneten in der Teig-Kneteinrichtung (61),
- zum Beispiel optisch erfassbares freies Oberflächenwasser auf dem Teig beim Kneten in der Teig-Kneteinrichtung (61),
- ein Gewicht einer Teigportion,
- ein Teig-Arbeitsdruck beim Teigportionieren in der Teig-Teileinrichtung (62),
- eine Wirkintensität beim Teig-Wirken in der Teig-Wirkeinrichtung (63),
- eine Geometrie einer Teigportion,
- eine Teig-Gärzeit,
- eine Gärtemperatur,
- eine Gärfeuchtigkeit,
- eine Teig-Volumenänderung während des Gärens in der Teig-Gäreinrichtung,
- eine Backtemperatur,
- eine Backzeit,
- ein Typ des Backofens (66),
- ein Teig-pH-Wert,
- ein Teig-Adhäsionsparameter.

8. Verfahren zum Betrieb einer Teigbearbeitungsanlage (4a) nach einem der Ansprüche 3 bis 7
- mit einem Dosierschritt (53) zum Vorgeben einer Zusammensetzung des zu verarbeitenden Teigs mittels der Teig-Dosiereinrichtung (60),
- mit einem Knetschritt (54) zum Kneten und Mischen der vorgegebenen Teig-Zusammensetzung mittels der Teig-Kneteinrichtung (61),
- mit einem Teigteilschritt zum Vorgeben einer Teigportion in Form eines weiterzuverarbeitenden Teiglings (27) mittels der Teig-Teileinrichtung (62; 13),
- mit einem Wirkschritt zum Wirken der vorgegebenen Teigportion (27) mittels der Teig-Wirkeinrichtung (63),
- mit einem Form/Veredelungsschritt (56) zur Formung und insbesondere Veredelung des Teiglings (27) mittels der Teigportions-Veredelungseinrichtung (64),
- mit einem Lager/Gärschritt (58) zum Lagern/Gären des Teiglings (27) mittels der Teigportions-Gäreinrichtung (65),
- wobei mit der Signalgenerierungs-Teigbearbeitungseinrichtung (61; 62; 13) die mindestens eine Teig-Zustandsgröße gemessen und der Steuer/Regeleinrichtung (51) zugeführt wird,
- wobei die Steuer/Regeleinrichtung (51) auf Grundlage der mindestens einen zugeführten Teig-Zustandsgröße eine Arbeitsweise der Signalempfangs-Teigbearbeitungseinrichtung (60, 61, 62, 13, 63, 64, 65, 66) steuert oder regelt,
**dadurch gekennzeichnet, dass**
mittels der Steuer/Regeleinrichtung (51) die Arbeitsweise einer der Signalgenerierungs-Teigbearbeitungseinrichtung vorgeordneten Teigbearbeitungseinrichtung gesteuert oder geregelt wird.

9. Verfahren nach Anspruch 8, **dadurch gekennzeichnet, dass** zwischen dem Knetschritt und dem Teigteilschritt eine Vorportionierung einer gekneteten Teigmasse stattfindet, die mit einem Vorportionierer (12) durchgeführt wird.

10. Verfahren nach Anspruch 8 oder 9, **dadurch gekennzeichnet, dass** mittels der Steuer/Regeleinrichtung (51) die Arbeitsweise einer der Signalgenerierungs-Teigbearbeitungseinrichtung nachgeordneten Teigbearbeitungseinrichtung gesteuert oder geregelt wird.

11. Verfahren nach einem der Ansprüche 8 bis 10, **dadurch gekennzeichnet, dass** mittels der Teig-Kneteinrichtung (61) als der Signalgenerierungs-Teigbearbeitungseinrichtung und der Steuer/Regeleinrichtung (51) die Arbeitsweise mindestens eine der folgenden Teigbearbeitungseinrichtungen gesteuert oder geregelt wird:
- Teig-Dosiereinrichtung (60),
- Teigportions-Veredelungseinrichtung (64),
- Teigportions-Gäreinrichtung (65).

12. Verfahren nach einem der Ansprüche 8 bis 11, **dadurch gekennzeichnet**, das mittels der Teig-Teileinrichtung (62; 13) als der Signalgenerierungs-Teigbearbeitungseinrichtung und der Steuer/Regeleinrichtung (51) die Arbeitsweise mindestens einer der nachfolgenden Teigbearbeitungseinrichtungen gesteuert oder geregelt wird:
- Teig-Dosiereinrichtung (60),
- Teig-Kneteinrichtung (61),
- Teigportions-Veredelungseinrichtung (64),
- Teigportions-Gäreinrichtung (65).

13. Verfahren nach einem der Ansprüche 8 bis 12, **gekennzeichnet durch** einen Backschritt (59) zum Backen des Teiglings (27).

14. Verfahren nach einem der Ansprüche 8 bis 13, **dadurch gekennzeichnet, dass** mindestens einer der folgenden Parameter zusätzlich erfasst wird:
- Eine Umgebungs-Luftfeuchte,
eine Umgebungs-Temperatur,
- eine Arbeitstemperatur der jeweiligen Teigbearbeitungseinrichtung (60 bis 66).

## Claims

1. Dough processing system (4a)
- having at least two of the following dough processing devices:
-- a dough dosing device (60) for the dosed addition of dough ingredients to be mixed,
-- a dough kneading device (61) for kneading dough made of prepared dough ingredients,
-- a dough portion finishing device (64) for prepared dough portions,
-- a dough portion proofing device (65) for prepared dough portions,
- wherein at least one of the at least two dough processing devices is designed as a signal generating dough processing device (61) having at least one sensor for measuring at least one dough state variable,
- wherein at least one other of the at least two dough processing devices is designed as a signal receiving dough processing device (60, 64, 65) having at least one processing component, which can be switched between a plurality of work states in a controlled manner,
- wherein the dough processing system has a control/regulation device (51), which has a signal connection to the at least one sensor of the at least one signal generating dough processing device (61) and to the at least one signal receiving dough processing device (60, 64, 65),
**characterised in that**
the signal generating dough processing device (61) is a dough processing device arranged downstream of the signal receiving dough processing device (60).

2. Dough processing system according to Claim 1, **characterised in that** the dough processing system has a plurality of signal generating dough processing devices and/or a plurality of signal receiving dough processing devices, which interact with one another when the dough processing system is in operation via the control/regulation device as part of a control and/or regulation process.

3. Dough processing system according to Claim 1 or 2, **characterised by** at least another of the following dough processing devices:
- a dough dividing device (62; 13) for portioning prepared dough,
- a dough working device (63) for prepared dough portions,
- an oven (66) for prepared dough portions.

4. Dough processing system according to Claim 3, **characterised in that** the signal generating dough processing device (61; 62; 13) is a dough processing device arranged upstream of the signal receiving dough processing device (62 to 66; 63 to 66).

5. Dough processing system according to one of Claims 1 to 4, **characterised in that** the signal generating dough processing device is the dough kneading device (61).

6. Dough processing system according to one of Claims 1 to 5, **characterised in that** the signal generating dough processing device is the dough dividing device (62; 13).

7. Dough processing system according to one of Claims 1 to 6, **characterised in that** the measured dough state variable is at least one of the following variables:
- a dough elasticity parameter (c_{d}),
- a dough viscosity parameter (d_{d}),
- a dough spring constant (ct),
- a dough damping parameter (dᵢ),
- a dough temperature before, during or after the respective processing step,
- a dough density,
- a dough moisture,
- a starch content of flour as a dough component,
- a fact content of the dough,
- a flour mixing ratio of the dough,
- a dough quantity to be kneaded,
- an energy absorption during dough kneading,
- a dough mixing time in the dough dosing device (60) and/or in the dough kneading device (61),
- a dough kneading time,
- a dough rest time between dosing in the dough dosing device (60) and kneading in the dough kneading device (61),
- a dough rest time after kneading in the dough kneading device (61),
- for example visually detectable free surface water on the dough during kneading in the dough kneading device (61),
- a weight of a dough portion,
- a dough working pressure during dough portioning in the dough dividing device (62),
- a working intensity during dough working in the dough working device (63),
- a geometry of a dough portion,
- a dough proofing time,
- a proofing temperature,
- a proofing humidity,
- a dough volume change during proofing in the dough proofing device,
- a baking temperature,
- a baking time,
- a type of oven (66),
- a dough pH value,
- a dough adhesion parameter.

8. Method for operating a dough processing system (4a) according to one of Claims 3 to 7
- having a dosing step (53) for presetting a composition of the dough to be processed by means of the dough dosing device (60),
- having a kneading step (54) for kneading and mixing the preset dough composition by means of the dough kneading device (61),
- having a dough dividing step for presetting a dough portion in the form of a piece of dough (27) to be further processed by means of the dough dividing device (62; 13),
- having a working step for working the preset dough portion (27) by means of the dough working device (63),
- having a moulding/finishing step (56) for moulding and in particular finishing the piece of dough (27) by means of the dough portion finishing device (64),
- having a storage/proofing step (58) for storing/proofing the piece of dough (27) by means of the dough portion proofing device (65),
- wherein the at least one dough state variable is measured by the signal generating dough processing device (61; 62; 13) and supplied to the control/regulation device (51),
- wherein on the basis of the at least one supplied dough state variable, the control/regulation device (51) controls or regulates operation of the signal receiving dough processing device (60, 61, 62, 13, 63, 64, 65, 66),
**characterised in that**
the operation of a dough processing device arranged upstream of the signal generating dough processing device is controlled or regulated by means of the control/regulation device (51).

9. Method according to Claim 8, **characterised in that** between the kneading step and the dough dividing step, pre-portioning of kneaded dough takes place, carried out by a pre-portioning device (12).

10. Method according to Claim 8 or 9, **characterised in that** the operation of a dough processing device arranged downstream of the signal generating dough processing device is controlled or regulated by means of the control/regulation device (51).

11. Method according to one of Claims 8 to 10, **characterised in that** the operation of at least one of the following dough processing devices is controlled or regulated by means of the dough kneading device (61) as the signal generating dough processing device and the control/regulation device (51):
- dough dosing device (60),
- dough portion finishing device (64),
- dough portion proofing device (65).

12. Method according to one of Claims 8 to 11, **characterised in that** the operation of at least one of the following dough processing devices is controlled or regulated by means of the dough dividing device (62; 13) as the signal generating dough processing device and the control/regulation device (51):
- dough dosing device (60),
- dough kneading device (61),
- dough portion finishing device (64),
- dough portion proofing device (65).

13. Method according to one of Claims 8 to 12, **characterised by** a baking step (59) for backing the piece of dough (27).

14. Method according to one of Claims 8 to 13, **characterised in that** at least one of the following parameters is also recorded:
- an ambient humidity,
- an ambient temperature,
- a working temperature of the respective dough processing device (60 to 66).

## Revendications

1. Installation de traitement de pâte (4a)
- dotée d'au moins deux des dispositifs de traitement de pâte suivants :
-- un dispositif de dosage de pâte (60) destiné à ajouter de manière dosée des ingrédients de la pâte à mélanger,
-- un dispositif de pétrissage de pâte (61) destiné à pétrir une pâte constituée d'ingrédients de la pâte préparés,
-- un dispositif de valorisation de portion de pâte (64) pour des portions de pâte préparées,
-- un dispositif de levage de portion de pâte (65) pour des portions de pâte préparées,
- dans laquelle au moins un des au moins deux dispositifs de traitement de pâte est réalisé sous la forme d'un dispositif de traitement de pâte générateur de signal (61) doté d'au moins un capteur pour mesurer au moins une grandeur d'état de la pâte,
- dans laquelle au moins un autre des au moins deux dispositifs de traitement de pâte est réalisé sous la forme d'un dispositif de traitement de pâte récepteur de signal (60, 64, 65) doté d'au moins un composant de traitement qui peut être commuté de manière commandée entre plusieurs états de fonctionnement,
- dans laquelle l'installation de traitement de pâte présente un dispositif de commande/régulation (51), qui est en liaison de signalisation avec l'au moins un capteur de l'au moins un dispositif de traitement de pâte générateur de signal (61) et avec l'au moins un dispositif de traitement de pâte récepteur de signal (60, 64, 65),
**caractérisée en ce que**
le dispositif de traitement de pâte générateur de signal (61) est un dispositif de traitement de pâte situé en aval du dispositif de traitement de pâte récepteur de signal (60).

2. Installation de traitement de pâte selon la revendication 1, **caractérisée en ce que** l'installation de traitement de pâte présente plusieurs dispositifs de traitement de pâte générateurs de signal et/ou plusieurs dispositifs de traitement de pâte récepteurs de signal, qui, lors du fonctionnement de l'installation de traitement de pâte, coopèrent les uns avec les autres par le biais du dispositif de commande/régulation dans le cadre d'une commande et/ou régulation.

3. Installation de traitement de pâte selon la revendication 1 ou 2, **caractérisée par** au moins un autre des dispositifs de traitement de pâte suivants :
- un dispositif de division de pâte (62 ; 13) destiné à diviser en portions de la pâte préparée,
- un dispositif de façonnage de pâte (63) pour des portions de pâte préparées,
- un four (66) pour des portions de pâte préparées.

4. Installation de traitement de pâte selon la revendication 3, **caractérisée en ce que** le dispositif de traitement de pâte générateur de signal (61 ; 62 ; 13) est un dispositif de traitement de pâte situé en amont du dispositif de traitement de pâte récepteur de signal (62 à 66 ; 63 à 66).

5. Installation de traitement de pâte selon l'une des revendications 1 à 4, **caractérisée en ce que** le dispositif de traitement de pâte générateur de signal est le dispositif de pétrissage de pâte (61).

6. Installation de traitement de pâte selon l'une des revendications 1 à 5, **caractérisée en ce que** le dispositif de traitement de pâte générateur de signal est le dispositif de division de pâte (62 ; 13).

7. Installation de traitement de pâte selon l'une des revendications 1 à 6, **caractérisée en ce que** la grandeur d'état mesurée de la pâte est au moins une des grandeurs suivantes :
- un paramètre d'élasticité de la pâte (c_{d}),
- un paramètre de viscosité de la pâte (d_{d}),
- une constante de rappel de la pâte (c_{T}),
- un paramètre d'amortissement de la pâte (d_{T}),
- une température de la pâte avant, pendant ou après l'étape de traitement respective,
- une densité de la pâte,
- une humidité de la pâte,
- une teneur en amidon de farine en tant que constituant de la pâte,
- une teneur en graisse de la pâte,
- une proportion de mélange de farine de la pâte,
- une quantité de pâte à pétrir,
- une consommation d'énergie lors du pétrissage de la pâte,
- un temps de mélange de la pâte dans le dispositif de dosage de pâte (60) et/ou dans le dispositif de pétrissage de pâte (61),
- un temps de pétrissage de la pâte,
- un temps de repos de la pâte entre le dosage dans le dispositif de dosage de pâte (60) et le pétrissage dans le dispositif de pétrissage de pâte (61),
- un temps de repos de la pâte après le pétrissage dans le dispositif de pétrissage de pâte (61),
- de l'eau de surface libre détectable par exemple de manière optique présente sur la pâte lors du pétrissage dans le dispositif de pétrissage de pâte (61),
- un poids d'une portion de pâte,
- une pression de travail de la pâte lors de la division en portions de la pâte dans le dispositif de division de pâte (62),
- une intensité de façonnage lors du façonnage de la pâte dans le dispositif de façonnage de pâte (63),
- une géométrie d'une portion de pâte,
- un temps de levage de la pâte,
- une température de levage,
- une humidité de levage,
- un changement de volume de la pâte pendant le levage dans le dispositif de levage de pâte,
- une température de cuisson,
- un temps de cuisson,
- un type de four (66),
- une valeur de pH de la pâte,
- un paramètre d'adhérence de la pâte.

8. Procédé de fonctionnement d'une installation de traitement de pâte (4a) selon l'une des revendications 3 à 7 comportant
- une étape de dosage (53) consistant à prédéfinir une composition de la pâte à travailler au moyen d'un dispositif de dosage de pâte (60),
- une étape de pétrissage (54) consistant à pétrir et mélanger la composition de la pâte prédéfinie au moyen du dispositif de pétrissage de pâte (61),
- une étape de division de pâte consistant à prédéfinir une portion de pâte sous la forme d'un pâton (27) à travailler ultérieurement au moyen du dispositif de division de pâte (62 ; 13),
- une étape de façonnage consistant à façonner la portion de pâte (27) prédéfinie au moyen du dispositif de façonnage de pâte (63),
- une étape de formage/valorisation (56) consistant à former et en particulier valoriser le pâton (27) au moyen du dispositif de valorisation de portion de pâte (64),
- une étape d'entreposage/levage (58) consistant à entreposer/faire lever le pâton (27) au moyen du dispositif de levage de portion de pâte (65),
- dans lequel l'au moins une grandeur d'état de la pâte est mesurée et introduite dans le dispositif de commande/régulation (51) par le dispositif de traitement de pâte générateur de signal (61 ; 62 ; 13),
- dans lequel le dispositif de commande/régulation (51) commande ou régule un mode de fonctionnement du dispositif de traitement de pâte récepteur de signal (60, 61, 62, 13, 63, 64, 65, 66) sur la base de l'au moins une grandeur d'état introduite de la pâte,
**caractérisé en ce que**
le mode de fonctionnement d'un dispositif de traitement de pâte situé en amont du dispositif de traitement de pâte générateur de signal est commandé ou régulé au moyen du dispositif de commande/régulation (51).

9. Procédé selon la revendication 8, **caractérisé en ce qu'**une prédivision en portions d'une masse de pâte pétrie est effectuée entre l'étape de pétrissage et l'étape de division de la pâte, ladite prédivision étant exécutée par une prédiviseuse (12).

10. Procédé selon la revendication 8 ou 9, **caractérisé en ce que** le mode de fonctionnement d'un dispositif de traitement de pâte situé en aval du dispositif de traitement de pâte générateur de signal est commandé ou régulé au moyen du dispositif de commande/régulation (51).

11. Procédé selon l'une des revendications 8 à 10, **caractérisé en ce que** le mode de fonctionnement d'au moins un des dispositifs de traitement de pâte suivants est commandé ou régulé au moyen du dispositif de pétrissage de pâte (61) en tant que dispositif de traitement de pâte générateur de signal et du dispositif de commande/régulation (51) :
- dispositif de dosage de pâte (60),
- dispositif de valorisation de portion de pâte (64),
- dispositif de levage de portion de pâte (65).

12. Procédé selon l'une des revendications 8 à 11, **caractérisé en ce que** le mode de fonctionnement d'au moins un des dispositifs de traitement de pâte suivants est commandé ou régulé au moyen du dispositif de division de pâte (62 ; 13) en tant que dispositif de traitement de pâte générateur de signal et du dispositif de commande/régulation (51) :
- dispositif de dosage de pâte (60),
- dispositif de pétrissage de pâte (61),
- dispositif de valorisation de portion de pâte (64),
- dispositif de levage de portion de pâte (65).

13. Procédé selon l'une des revendications 8 à 12, **caractérisé par** une étape de cuisson (59) consistant à cuire le pâton (27).

14. Procédé selon l'une des revendications 8 à 13, **caractérisé en ce qu'**au moins un des paramètres suivants est détecté en plus :
- une humidité de l'air ambiante,
- une température ambiante,
- une température de travail du dispositif de traitement de pâte (60 à 66) respectif.
